# EUROPEAN PATENT APPLICATION

(11) **EP 4 163 795 A1**
(43) Date of publication of application: **12.04.2023**
(21) Application number: 22194159.4
(22) Date of filing: 06.09.2022
(51) Int. Cl.: G06F 11/34, G06F 9/50, G06F 12/0897

(54) **TECHNIQUES FOR CORE-SPECIFIC METRICS COLLECTION**

(30) Priority: 06.10.2021 US 202117495454
(71) Applicant: INTEL Corporation, Santa Clara, CA 95054 (US)
(72) Inventor: WYSOCKI, Piotr, 80-041 Gdansk (PL); GUIM BERNAT, Francesc, 08036 Barcelona (ES); BROWNE, John J., Limerick (IE); ZAK, Pawel, 80-176 Gdansk, Pomorskie (PL); SZTEJNA, Rafal, 80-298 Gdansk (PL); PERYCZ, Przemyslaw, 81-827 Sopot PM (PL); VERRALL, Timothy, Pleasant Hill, 94523 (US); KONEFAL, Szymon, 80-299 Gdansk, Pomorskie, (PL)
(74) Representative: 2SPL Patentanwälte PartG mbB

(57) **Abstract**

Examples include techniques for core-specific metrics collection. Examples include fetching metrics of a core of a multi-core processor from one or more registers responsive to scheduling of an event. The fetched metrics are pushed to a shared memory space of a memory that is accessible to a user-space application and accessible to other cores of the multi-core processor. The user-space application to access the shared memory space to aggregate core-specific metrics associated with at least the core of the multi-core processor and then publish the aggregated core-specific metrics.

## Description

### TECHNICAL FIELD

Examples described herein are generally related to techniques for collecting, processing, or publishing core-specific metrics or metrics information for a multi-core processor.

### BACKGROUND

In some examples, a high sampling rate to obtain operating metrics or telemetry for a computing system or platform may be needed in order to initiate efficient, accurate, and possibly consecutive actions while attempting to maintain quality of service (QoS) requirements associated with running collocated workloads on the computing system or platform. The collocated workloads, for example, may be supported by cores of one or more multi-core processors maintained in a single socket or a multi-socket configuration. The cores arranged to separately execute workload threads associated with the collocated workloads. Core-specific metrics for individual cores of these multi-core processors may be exposed, for example, via use of Intel^{®} Resource Director Technology (RDT) or utilizing an Intel^{®} Performance Counter Monitor (PMU).

### BRIEF DESCRIPTION OF THE DRAWINGS

**FIG. 1** illustrates an example system.
**FIG. 2** illustrates an example collection framework.
**FIG. 3** illustrates an example process.
**FIG. 4** illustrates an example first apparatus.
**FIG. 5** illustrates an example first logic flow.
**FIG. 6** illustrates an example first storage medium.
**FIG. 7** illustrates an example second apparatus.
**FIG. 8** illustrates an example second flow.
**FIG. 9** illustrates an example second storage medium.
**FIG. 10** illustrates an example computing platform.

### DETAILED DESCRIPTION

As contemplated by this disclosure, it is a challenge to collect core-specific metrics for multi-core processors supporting collocated workloads and also minimize impacts to meeting QoS requirements associated with running the collocated workloads on a computing system or platform. In some examples, the computing system or platform may be located within a server or rack coupled with a communications network at an edge location or at centralized location such as a telecommunication core datacenter. Methods to collect core-specific metrics (e.g., use of Intel^{®} RDT or PMU) may be used in a somewhat non-production fashion. The non-production fashion may be caused due to a lack of an ability to have a high enough throughput for collecting core-specific metrics without resulting in an unacceptable impact to meeting QoS requirements. As a result, performance counters are deployed in a non-production fashion to understand and root cause potential performance "glass-jaws" of applications that generate or request collocated workloads. However, this information obtained in a non-production fashion may be relevant in only lab environments.

According to some examples, what it is needed in many cases in live, field deployments, is an ability to collect core-specific metrics impacted by dynamic effects (such as change of load, noisy neighbors, or changes in platform configurations) that may create different performance glass-jaws of applications that need to be captured. In typical live, field deployments, a relatively small sub-set of core-specific metrics (e.g., using an Intel^{®} PMU tool such as *collectd* or similar tools) are collected. The relatively small sub-set may not be sufficient to determine a root cause to many types of dynamic or corner case effects that indicate possible performance glass-j aws.

Currently, existing solutions for collecting core-specific metrics ("collectors") may be relatively resource intensive or heavy, requiring code execution on a user space / application side or on an operating system (OS) kernel space side. Current collectors, due primarily to resource intensiveness, may be limited to a relatively low sampling frequency for collection of core-specific metrics. That frequency may be limited to a frequency of every few seconds. Meanwhile, a useful sampling frequency of at least every 100 milliseconds (ms) or less may be what is needed to generate actionable insights focused on meeting one or more QoS requirements associated with running collocated workloads using cores of a multi-core processor of a computing system or platform. Forcing these current collectors to have sampling frequency of at least 100ms may cause high resource consumption (e.g., retired central processing unit (CPU) cycles, last level cache (LLC) trashing, etc.). This high resource consumption may lead to an unacceptable impact to meeting QoS requirements associated with running the collocated workloads. This unacceptable impact to meeting QoS requirements may be magnified when current types of collectors follow an assumption of fixed intervals between sampling events that may lead to these collectors becoming one of the primary workloads in a computing system or platform rather than just collecting core-specific metrics when needed and/or when collected core-specific metrics are more likely to provide actionable sampling results. Also, many core-specific metrics may only be read by a core for which a particular metric is related. Current collectors may necessitate use of inter-core communication links for purposes of reading values from separate core-specific registers (e.g., model-specific registers (MSRs)) that are only accessible by a respective core for which the particular metric is related. Use of inter-core communication links may add latency to retrieving core-specific metrics and may also negatively impact overall compute system performance.

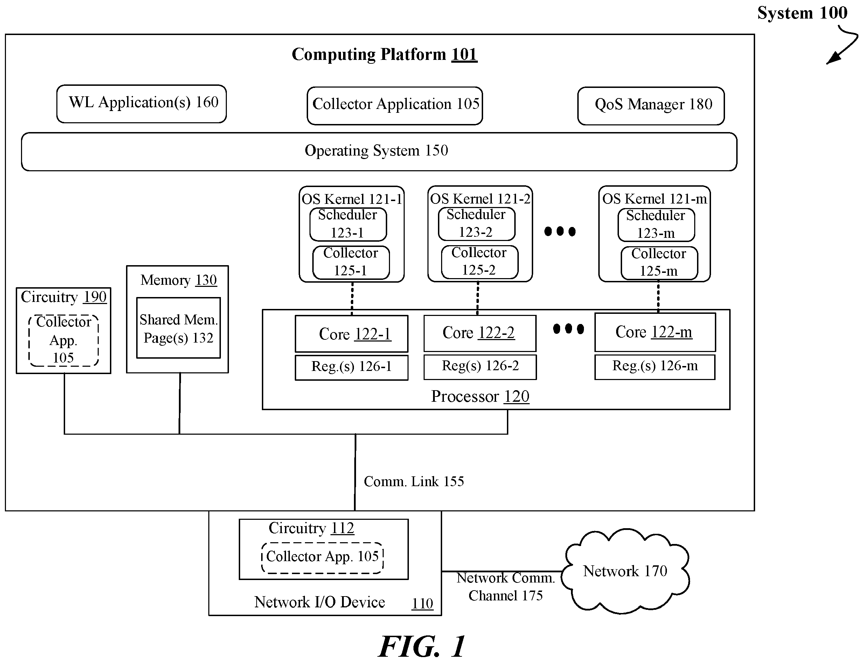

**FIG. 1** illustrates an example system 100. As shown in FIG. 1, system 100 includes a computing platform 101 coupled to a network 170. In some examples, as shown in FIG. 1, computing platform 101 may couple to network 170 via a network communication (comm.) channel 175 and through a network input/output (I/O) device 110 (e.g., a network interface controller (NIC)) having one or more ports connected or coupled to network comm. channel 175.

According to some examples, computing platform 101, as shown in FIG. 1, may include a processor 120, a memory 130, an operating system 150, one or more workload (WL) application(s) 160, a collector application 105, a QoS manager 180, or circuitry 190. In some examples, as shown in FIG. 1, processor 120 may communicatively couple to memory 130 and network I/O device 110 via comm. link 155. Although not shown in FIG. 1, in some examples, operating system 150, NW I/O device driver 140 or application(s) 160 may be implemented, at least in part, via cooperation between one or more memory devices included in memory 130 (e.g., volatile or non-volatile memory devices) and elements of processor 120 such as cores 122-1 to 122-m, where "m" is any positive whole integer greater than 2. In some examples, WL application(s) 160 may utilize one or more cores from among cores 122-1 to 122-m to run collocated workloads on computing platform 101.

In some examples, as described more below, OS kernels 121-1 to 121-m may be executed by respective cores 122-1 to 122-m. For these examples, within each core's respective kernel space, schedulers 123-1 to 123-m may be arranged as event schedulers to manage or control interactions with one or more workload threads requested by WL application(s) 160 to be executed by cores 122-1 to 122-m. Also, within each core's respective kernel space, collectors 125-1 to 125-m may be arranged to fetch core-specific metrics from register(s) 126-1 to 126-m. Register(s) 126-1 to 126-m may be arranged to store, at least temporarily, core-specific metrics data from respective cores 122-1 to 122-m (e.g., data related to metrics for each core as respective workload threads are executed). For example, register(s) 126-1 may be arranged to store core-specific metrics data for core 122-1, register(s) 126-2 may be arranged to store core-specific metrics data for core 122-2, etc. As described more below, collectors 125-1 to 125-m may fetch the core-specific metrics responsive to events scheduled by schedulers 123-1 to 123-m based on task requests associated or related to cores 122-1 to 122-m executing workload threads. The task requests may be received from operating system 150 or WL application(s) 160. In other examples, collectors 125-1 to 125-m may be limited or restricted to a lower frequency to fetch core-specific metrics than responsive to every task request or scheduling of events associated with task requests, provided the lower frequency is still at a rate that generates actionable results useful for taking necessary actions to meet QoS requirements. Task requests may include, but are not limited to, thread scheduling/de-scheduling, system calls or exceptions. Collectors 125-1 to 125-m may then push collected core-specific metrics data to a shared memory space maintained in memory 130. For example, collectors 125-1 to 125-m may push the collected core-specific metrics data to shared memory page(s) 132 located or maintained in memory 130 as shown in FIG. 1.

Also, as described more below, collector application 105 may fetch the collected metrics data pushed to shared memory pages(s) 132 and process the collected metrics data in user space. Collector application 105 may publish or package processed results at regular intervals of time (e.g., every 1 second). Published or packaged results may be sent to an orchestrator (not shown) coupled to network 170 through network I/O device 110 via network communication channel 175 for remote QoS management or may be sent locally to logic or features of computing platform 101 responsible for local QoS management of computing platform 101 such as QoS manager 180 and/or a QoS agent (not shown) executed by operating system 150. According to some examples, collector application 105 may be capable of using various types of data plane frameworks to publish or package processed results to include, but not limited to, the Data Plane Development Kit (DPDK) framework or the Open Data Plane (ODP) application programming interface (API) framework.

According to some examples, collector application 105 may be executed by a dedicated core from among cores 122-1 to 122-m. In a second example, circuitry 112 at network I/O device may be arranged to execute collector application 105. In a third example, circuitry 190 may be arranged to execute collector application 105. For the second or third examples, circuitry 112 or 190 may have access to shared memory page(s) 132 to enable a collector application 105 executed by circuitry 112 or 190 to fetch core-specific metrics. Circuitry 112 or 190 may include, but are not limited to, processor circuitry, an application specific integrated circuit (ASIC), field programmable gate array (FPGA) or any combination thereof.

In some examples, computing platform 101, may include, but is not limited to, a server, a server array or server farm, a web server, a network server, an Internet server, a workstation, a mini-computer, a main frame computer, a supercomputer, a network appliance, a web appliance, a distributed computing system, multiprocessor systems, processor-based systems, or combination thereof. Also, processor 120 having cores 122-1 to 122-m may include various commercially available processors, including without limitation processors from Intel^{®} AMD^{®}, Nvidia^{®}, Qualcomm^{®}, ARM^{®}, IBM^{®}, Samsung^{®} or other designers or manufactures of processors.

According to some examples, memory 130 may be composed of one or more memory devices or dies which may include various types of volatile and/or non-volatile memory. Volatile types of memory may include, but are not limited to, dynamic random access memory (DRAM), static random access memory (SRAM), thyristor RAM (TRAM) or zero-capacitor RAM (ZRAM). Non-volatile types of memory may include byte or block addressable types of non-volatile memory having a 3-dimensional (3-D) cross-point memory structure that includes chalcogenide phase change material (e.g., chalcogenide glass) hereinafter referred to as "3 -D cross-point memory". Non-volatile types of memory may also include other types of byte or block addressable non-volatile memory such as, but not limited to, multi-threshold level NAND flash memory, NOR flash memory, single or multi-level phase change memory (PCM), resistive memory, nanowire memory, ferroelectric transistor random access memory (FeTRAM), magnetoresistive random access memory (MRAM) that incorporates memristor technology, spin transfer torque MRAM (STT-MRAM), or a combination of any of the above.

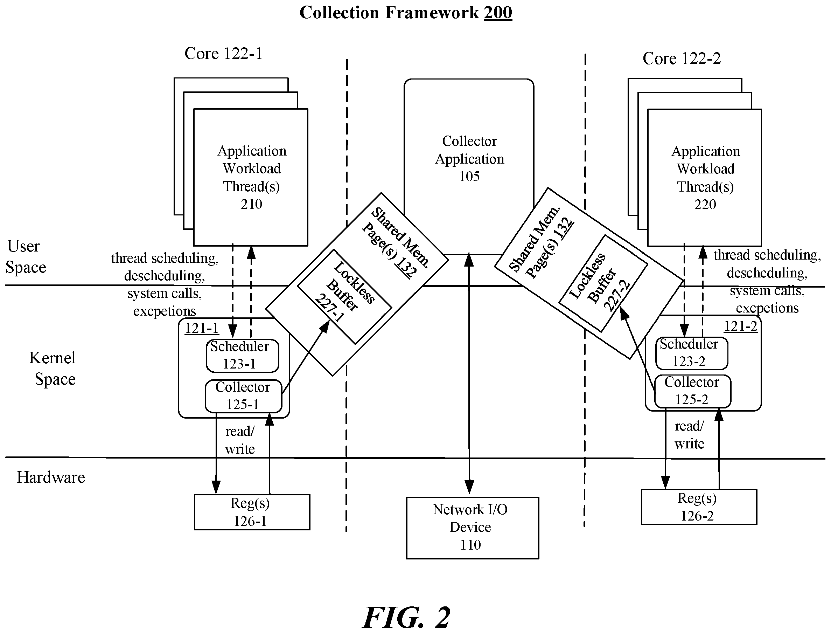

FIG. 2 illustrates an example collection framework 200. In some examples, as shown in FIG. 2, cores 122-1 and 122-2 may be arranged to execute respective application workload(s) 210 and 220. One or more application workload thread(s) 210 may be initiated by a first application from among WL application(s) 160 and one or more application workload thread(s) 220 may be initiated by a second application from among WL applications(s) 160. For these examples, initiation of application workload thread(s) 210 and 220 and operation of collector application 105 may occur in user space (e.g., a memory space or area for use by software applications). Also, as shown in FIG. 2, OS kernels 121-1 and 121-2 that include respective schedulers 123-1/2 and collectors 125-1/2 may operate in kernel space (a memory space limited to use by OS kernels or cores). Also, according to the example collection framework 200, register(s) 126-1/2 and network I/O device 110 are indicated as operating in hardware to distinguish these elements of hardware from kernel and user space operating elements.

According to some examples, core-specific metrics sampling by collectors 125-1/2 for respective cores 122-1/2 may be integrated and/or correlated with events scheduled by schedulers 123-1/2. For these examples, the scheduled event may be based on a task request associated with or related to cores 122-1/2 executing application workload thread(s) 210/220. A number of situations may exist for when schedulers 123-1/2 schedule events. For example, starting a new workload thread, yield control of a workload task to OS kernels 121-1/2, a task preemption, exception handling (e.g., page fault), system call handling (e.g., I/O read/write completion), or receiving a signal to power/wake up a workload thread that was in a sleep or low power state. Each scheduled event may be used as a type of context switch via which OS kernels 121-1/2 may be arranged to execute an additional lightweight piece of code to execute respective collectors 125-1/2. Collectors 125-1/2 may be arranged or configured to read core-specific metrics from respective register(s) 126-1/2 and augment the collected core-specific metrics with additional information or metadata (e.g., timestamp or thread identifier(s)). Collectors 125-1/2 may also be arranged or configured to read core-specific metrics from a given location in a system physical address space of a memory (e.g., shared memory page(s) 132 of memory 130).

In some examples, collectors 125-1/2 may push collected core-specific metrics and associated information/metadata in a lockless way to respective lockless buffers 227-1/2 included in shared memory page(s) 132. According to some examples, shared memory page(s) 132 may be configured as non-pageable memory to support lockless buffers 227-1/2. Collector application 105 may then fetch the collected core-specific metrics and associated information/metadata from lockless buffers 227-1/2 to perform further processing and eventually publish what has been processed to a remote QoS management entity (e.g., an orchestrator at a different computing platform) or to a local QoS management entity (e.g., QoS manager 180). For these examples, lockless buffers 227-1/2 may be a single producer, single consumer buffer.

According to some examples, collectors 125-1/2 may have an ability to write commands to control logic at cores 122-1/2 to program register(s) 126-1/2 to indicate what particular core-specific metrics are to be, at least temporarily, stored to register(s) 126-1/2 during execution of application workload thread(s) 210 so that collectors 125-1/2 may fetch those core-specific metrics. Write commands to register(s) 126-1/2, in some examples, may also enable or reset counters associated with one or more core-specific metrics. In some examples, register(s) 126-1/2 may function in a similar manner to model-specific registers (MSRs) included in a performance monitoring unit (PMU) supporting Intel^{®} IA-64 or IA-32 processor architectures that may include, but are not limited to, counter registers, event programming registers or global event control registers. Core-specific metrics may include, but are not limited to, instructions executed, level 2 (L2) cache misses, L2 cache hits, L3 cache misses, L2 cache hits, branches mis-predicted, elapsed core clock ticks, core operating frequency, or core memory bandwidth usage.

In some examples, core-specific metrics are not collected at a fixed time interval. Rather a type of context switching occurs at collectors 125-1 responsive to task requests to schedulers 123-1/2 by application workload thread(s) 210/220. These types of task request interactions, in some examples, may happen hundreds to thousands of times per second or even more often. For these examples, collector application 105 may perform metric processing that includes producing a number of aggregates. The number of aggregates may represent multiple core-specific metrics collected or fetched from lockless buffer 227 to generate core-specific metrics information. For example, the number of aggregates to generate core-specific metrics information may include, but are not limited to, minimum values for core-specific metrics, maximum values for core-specific metrics, average values for core-specific metrics or 90 percentile values for core-specific metrics. Collector application 105 may then publish the produced aggregates representing the multiple core-specific metrics collected according to a fixed time interval (e.g., every 1 second). A relatively large number of core-specific metrics collected and then aggregated may be more useful for generating actionable insights focused on managing or controlling QoS requirements associated with executing or running application workload thread(s) 210/220 compared to collecting single core-specific metrics over the same fixed, configured time interval (e.g., every 1 second).

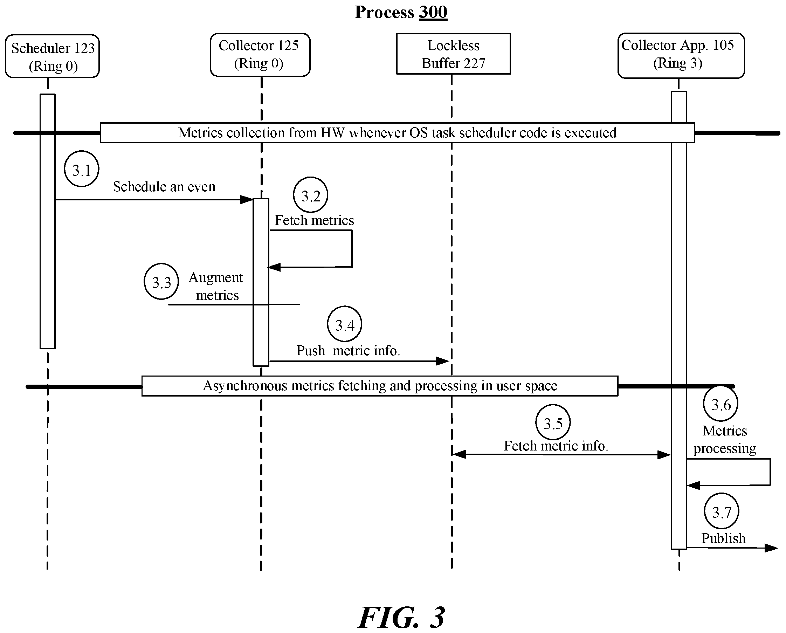

**FIG. 3** illustrates an example process 300. According to some examples, process 300 may be implemented to collect, in a kernel space, core-specific metrics based on context switching triggered or responsive to task requests associated with cores of a multi-core processor supporting collocated workloads and then fetch and process the collected core-specific metrics, in a user space, to publish or generate information. The published or generated information, for example, may be used to meet QoS requirements associated with supporting the collocated workloads. For these examples, as shown in FIG. 3, scheduler 123, collector 125, lockless buffer 227 and collector application 105, as shown in FIGS. 1-2 and described above, are used to describe process 300. Examples for collecting, processing, and publishing core-specific metrics are not limited to only these elements shown in FIGS. 1-3.

Beginning at 3.1, scheduler 123 may schedule an event. In some examples, multiple task requests may be initiated by an application requesting execution of a workload thread that results in a kernel from among kernels 121-1 to 121-m to execute code to cause scheduler 123 to schedule an event related to execution of the workload thread by a core from among core 120-1 to 120-m. For these examples, ring 0 is shown in FIG. 3 for scheduler 123 to indicate that scheduler 123 is executed within a protected portion of system memory related to a kernel space.

Moving to 3.2, collector 125 may fetch metrics. According to some examples, collector 125 fetches core-specific metrics from register(s) 126 associated with the core executing the workload thread responsive to scheduler 123 scheduling each event related to execution of the workload thread. For these examples, ring 0 is shown in FIG. 3 for collector 125 to indicate that collector 125 is executed within a protected portion of system memory related to a kernel space.

Moving to 3.3, collector 125 augments metrics. In some examples, collector 125 augments the collected or fetched core-specific metrics with additional information such as a timestamp indicating a time that each core-specific metric was fetched from register(s) 126 or thread identifier(s) associated with the workload thread that initiated a task request that caused an event or events to be scheduled and the core-specific metric or metrics to be fetched.

Moving to 3.4, collector 125 may push metric information to a lockless buffer 227. In some examples, collector 125 pushes metrics information that includes core-specific metrics and augmented timestamp or thread identifier information to lockless buffer 227 maintained in shared memory page(s) 132 of memory 130.

Moving to 3.5, collector application 105 may fetch metrics information from lockless buffer 227. According to some examples, collector application 105 may fetch metrics information at a fixed time interval of every 1 second. For these examples, collector 125 may have pushed a relatively large number of collected or fetched core-specific metrics and associated information to lockless buffer 227 over a time period of 1 second (e.g., a time period threshold). For example, if core-specific metrics were fetched from register(s) 126 about every 20ms, then around 50 core-specific metrics and associated information may have been pushed to lockless buffer 227 over a 1 second time period. For these examples, ring 3 is shown in FIG. 3 for collector application 105 to indicate that collector application 105 is executed within a portion of system memory related to a user space. Hence, the collector application 105 may be referred to as a "user-space application".

Moving to 3.6, collector application 105 performs metrics processing. In some examples, metric processing may include producing a number of aggregates (e.g., minimum, maximum, average, 90 percentile, etc.) for the metrics information fetched from lockless buffer 227 over the 1 second time interval.

Moving to 3.7, collector application 105 may publish the processed metrics. According to some examples, collector application 105 may send the processed metrics to an orchestrator coupled to computing platform 101 via network 170 for remote QoS management or may send the processed metrics to QoS manager 180 at computing platform 101 for local QoS management. The remote or local QoS management, for example, to use the processed metrics to manage or control QoS requirements associated with computing platform 101 running collocated workloads such as application workload threads executed by one or more cores included in cores 122-1 to 122-m. Process 300 may come to an end following the example 1 second time interval or may restart at 3.1 at the start of a subsequent 1 second time interval. Examples are not limited to 1 second intervals for processing and/or publishing metrics.

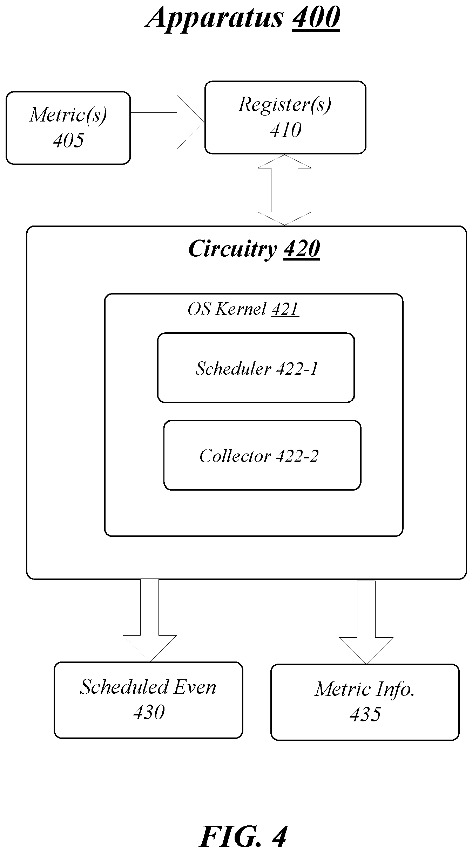

**FIG. 4** illustrates an example apparatus 400. Although apparatus 400 shown in FIG. 4 has a limited number of elements in a certain topology, it may be appreciated that the apparatus 400 may include more or less elements in alternate topologies as desired for a given implementation.

According to some examples, apparatus 400 may be supported by circuitry 420 and apparatus 400 may be a a core included among a plurality of cores of a multi-core processor. For example, a core from among cores 122-1 to 122-m such as described above and shown in FIGS. 1-2. Circuitry 420 may be arranged to execute an OS kernel 421 similar to OS kernels 121-1 to 122-m also shown in FIGS. 1-2. OS kernel 421 may be arranged to execute one or more software or firmware implemented logic, components, or modules 422-*a*. For example, OS kernel 421 may be arranged to execute a scheduler 422-1 and a collector 422-2 similar to schedulers 123-1 to 123-m and collectors 125-1 to 125-m also shown in FIGS. 1-2.

In some examples, apparatus 400 may include one or more register(s) 410. For these examples, register(s) 410 may store at least one metric of the core while the core executes a workload thread. The at least one metric may be included in metric(s) 405.

According to some examples, scheduler 422-1 may be executed by circuitry 420 and/or OS kernel 421 to schedule an event related to execution of the workload thread by the core. For these examples, the event may be included in event 430 and may be based on a task request associated with or related to execution of the workload thread.

In some examples, collector 422-2 may be executed by circuitry 420 and/or OS kernel 421 to fetch, responsive to scheduling the event, a first metric from the one or more registers, the first metric to indicate a first performance characteristic of the core over a first time interval while the core executes the workload thread.

According to some examples, collector 422-2 may also be executed by circuitry 420 and/or OS kernel 421 to push the first metric to a shared memory space of a memory accessible to a user-space application and accessible to other cores of the multi-core processor. The pushed first metric, for example, may be included in metric info. 435 and may be augmented with a timestamp or a workload thread ID assigned to the workload thread being executed by the core.

Included herein is a set of logic flows representative of example methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow may be implemented in software, firmware, and/or hardware. In software and firmware embodiments, a logic flow may be implemented by computer executable instructions stored on at least one non-transitory computer readable medium or machine readable medium, such as an optical, magnetic or semiconductor storage. The embodiments are not limited in this context.

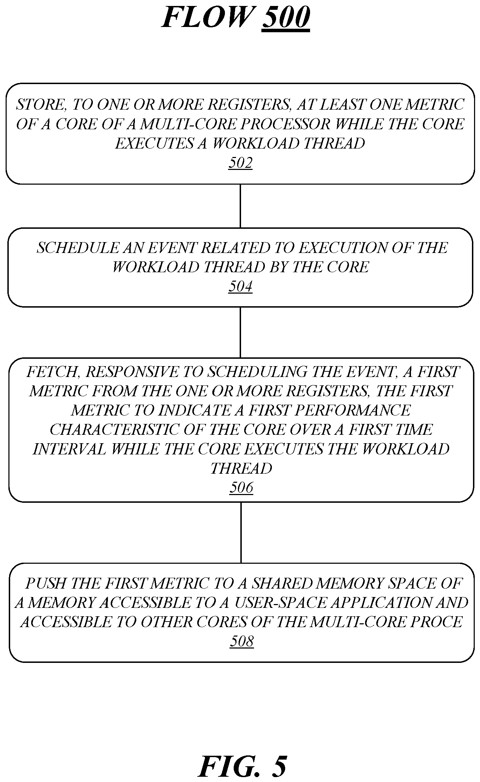

**FIG. 5** illustrates an example of a logic flow 500. Logic flow 500 may be representative of some or all of the operations executed by one or more logic, features, or devices described herein, such as logic and/or features included in apparatus 400. More particularly, logic flow 500 may be implemented by one or more of circuitry 420, OS kernel 421, register(s) 410, scheduler 422-1 or collector 422-2.

According to some examples, as shown in **FIG. 5****,** logic flow 500 at block 502 may store, to one or more registers, at least one metric of a core of a multi-core processor while the core executes a workload thread. For these examples, circuitry 420 and/or OS kernel 421 may cause the at least one metric of the core to be stored to register(s) 410.

In some examples, logic flow 500 at block 504 may schedule an event related to execution of the workload thread by the core. For these examples, scheduler 422-1 may schedule the event.

According to some examples, logic flow 500 at block 506 may fetch, responsive to scheduling the event, a first metric from the one or more registers, the first metric to indicate a first performance characteristic of the core over a first time interval while the firt core executes the workload thread. For these examples, collector 422-2 may fetch the first metric from register(s) 410.

In some examples, logic flow 500 at block 508 may push the first metric to a shared memory space of a memory accessible to a user-space application and accessible to other cores of the multi-core processor. For these examples, collector 422-2 may push the first metric to the shared memory space of the memory.

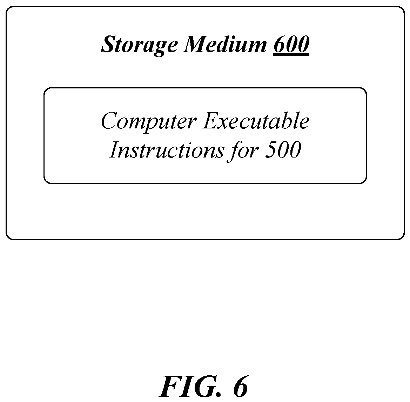

**FIG. 6** illustrates an example of a first storage medium. As shown in FIG. 6, the first storage medium includes a storage medium 600. The storage medium 600 may comprise an article of manufacture. In some examples, storage medium 600 may include any non-transitory computer readable medium or machine readable medium, such as an optical, magnetic or semiconductor storage. Storage medium 600 may store various types of computer executable instructions, such as instructions to implement logic flow 500. Examples of a computer readable or machine readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

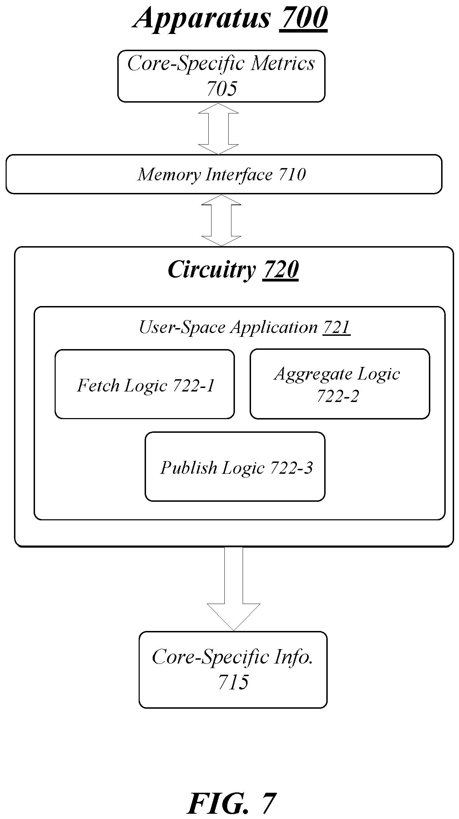

**FIG. 7** illustrates an example apparatus 700. Although apparatus 700 shown in FIG. 7 has a limited number of elements in a certain topology, it may be appreciated that the apparatus 700 may include more or less elements in alternate topologies as desired for a given implementation.

According to some examples, apparatus 700 may be supported by circuitry 720. Apparatus 700 may be a multi-core processor and circuitry 720 may be one or more dedicated cores from among a plurality of cores of a multi-core processor. For example, a core from among cores 122-1 to 122-m such as shown in FIGS. 1-2. Alternatively, apparatus 700 may be a network interface controller or card (NIC) coupled with a computing platform (e.g., computing platform 101) and circuitry 720 may be at or resident on the NIC. In yet another alternative, apparatus 700 may be an ASIC or FPGA (e.g., functioning as an accelerator for a multi-core processor or computing platform) and circuitry 720 may be circuitry of the ASIC or FPGA. Circuitry 720 may be arranged to execute a user-space application 721 similar to collector application 105 as described above and shown in FIGS. 1-3. User-space application 721 may be arranged to implement one or more features or logic 722-*a*. It is worthy to note that "*a*" and *"b"* and "c" and similar designators as used herein are intended to be variables representing any positive integer. Thus, for example, if an implementation sets a value for *a* = 3, then a complete set of features or logic 722-*a* may include features or logic 722-1, 722-2 or 722-3. Also, at least a portion of "logic" may be stored in computer-readable media, or may be implemented, at least in part in hardware and although the logic is shown in FIG. 7 as discrete boxes, this does not limit logic or features to storage in distinct computer-readable media components (e.g., a separate memory, etc.) or implementation by distinct hardware components (e.g., separate cores, ASICs, or FPGAs).

In some examples, as shown in FIG 7, apparatus 700 may include a memory interface 710 to access a shared memory space of a memory accessible to cores of a multi-core processor. For example, memory interface 710 may be to access a shared memory space such as shared memory page(s) 132 of memory 130 that, as described above for FIG. 1-3, is accessible to cores 122-1 to 122-m of processor 120 (e.g., to push core-specific metrics to lockless buffers).

According to some examples, apparatus 700 may include a fetch logic 722-1. Fetch logic 722-1 may be a logic of user-space application 721 to fetch core-specific metrics stored to the shared memory space via the memory interface, the core-specific metrics to indicate performance characteristics of one or more cores of the multi-core processor while the one or more cores execute workload threads. For these examples, fetch logic 722-1 may fetch core-specific metrics 705 from the shared memory space.

In some examples, apparatus 700 may also include an aggregate logic 722-2. Aggregate logic 722-2 may be a logic of user-space application 721 to aggregate, over a time interval, fetched core-specific metrics to generate core-specific metrics information. According to some examples, the time interval may be 1 second.

According to some examples, apparatus 700 may also include publish logic 722-3. Publish logic 722-3 may be a logic of user-space application 721 to publish the core-specific metrics information. In some examples, the core-specific metrics information is included in core specific info. 715

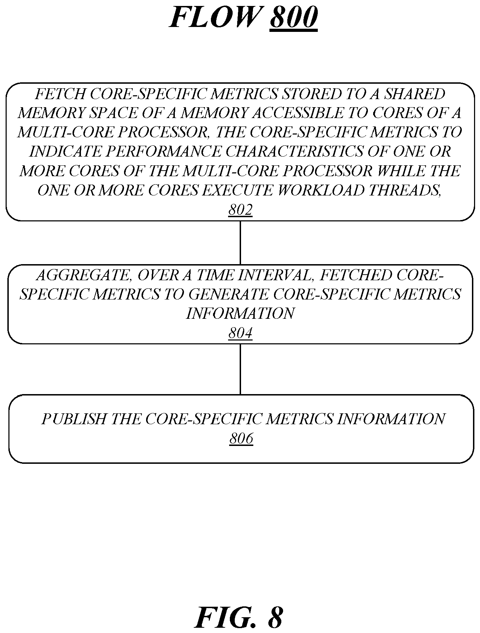

**FIG. 8** illustrates an example of a logic flow 800. Logic flow 800 may be representative of some or all of the operations executed by one or more logic, features, or devices described herein, such as logic and/or features included in apparatus 700. More particularly, logic flow 800 may be implemented by one or more of fetch logic 722-1, aggregate logic 722-2 or publish logic 722-3.

According to some examples, as shown in **FIG. 8****,** logic flow 800 at block 802 may fetch core-specific metrics stored to a shared memory space of a memory accessible to cores of a multi-core processor, the core-specific metrics to indicate performance characteristics of one or more cores of the multi-core processor while the one or more cores execute workload threads. For these examples, fetch logic 722-1 may fetch the core-specific metrics from multiple lockless buffers maintained in the shared memory space of the memory. Each core of the one or more cores of the multi-core processor may be arranged to push metrics to indicate performance characteristics of each core while executing one or more workload threads over the time interval. The metrics of each core may be pushed to different lockless buffers from among the multiple lockless buffers.

In some examples, logic flow 800 at block 804 may aggregate, over a time interval, fetched core-specific metrics to generate core-specific metrics information. For these examples, aggregate logic 722-2 may aggregate the fetched core-specific metrics to generate core-specific information that may include, but is not limited to, a minimum value of the fetched core-specific metrics, a maximum value of the fetched core-specific metrics, an average value of the fetched core-specific metrics or a 90 percentile values of the fetched core-specific metrics.

According to some examples, logic flow 800 at block 806 may publish the core-specific metrics information. For these examples, publish logic 722-3 may publish the core-specific metrics information to a QoS management application that may be local or remote to a computing system that hosts apparatus 700.

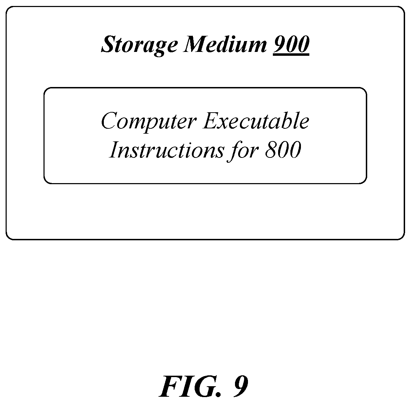

**FIG. 9** illustrates an example of a first storage medium. As shown in FIG. 9, the first storage medium includes a storage medium 900. The storage medium 900 may comprise an article of manufacture. In some examples, storage medium 900 may include any non-transitory computer readable medium or machine readable medium, such as an optical, magnetic or semiconductor storage. Storage medium 900 may store various types of computer executable instructions, such as instructions to implement logic flow 800. Examples of a computer readable or machine readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

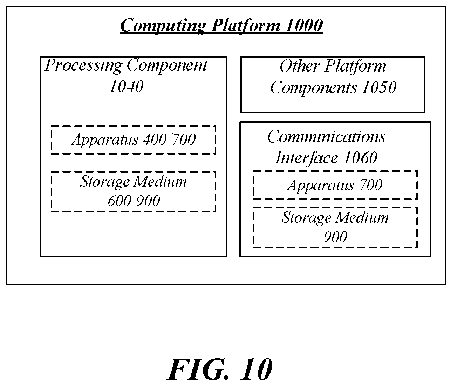

**FIG. 10** illustrates an example computing platform 1000. In some examples, as shown in FIG. 10, computing platform 1000 may include a processing component 1040, other platform components 1050 or a communications interface 1060. According to some examples, computing platform 1000 may be implemented in a computing device.

According to some examples, processing components 1040 may execute at least some processing operations or logic for apparatus 400 and/or 700 based on instructions included in a storage media that includes respective storage medium 600 and/or 900. Processing components 1040 may include various hardware elements, software elements, or a combination of both. For these examples, Examples of hardware elements may include devices, logic devices, components, processors, microprocessors, management controllers, companion dice, circuits, processor circuits, circuit elements (e.g., transistors, resistors, capacitors, inductors, and so forth), integrated circuits, ASICs, programmable logic devices (PLDs), digital signal processors (DSPs), FPGAs, memory units, logic gates, registers, semiconductor device, chips, microchips, chip sets, and so forth. Examples of software elements may include software components, programs, applications, computer programs, application programs, device drivers, system programs, software development programs, machine programs, operating system software, middleware, firmware, software modules, routines, subroutines, functions, methods, procedures, software interfaces, application program interfaces (APIs), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

According to some examples, processing component 1040 may include an infrastructure processing unit (IPU) or data processing unit (DPU) or may be utilized by an IPU or DPU. An xPU may refer at least to an IPU, DPU, graphic processing unit (GPU), general-purpose GPU (GPGPU). An IPU or DPU may include a network interface with one or more programmable or fixed function processors to perform offload of operations that could have been performed by a central processing unit (CPU). The IPU or DPU can include one or more memory devices (not shown). In some examples, the IPU or DPU can perform virtual switch operations, manage storage transactions (e.g., compression, cryptography, virtualization), and manage operations performed on other IPUs, DPUs, servers, or devices.

In some examples, other platform components 1050 may include common computing elements, memory units (that include system memory), chipsets, controllers, peripherals, interfaces, oscillators, timing devices, video cards, audio cards, multimedia input/output (I/O) components (e.g., digital displays), power supplies, and so forth. Examples of memory units or memory devices included in other platform components 1050 may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory), solid state drives (SSD) and any other type of storage media suitable for storing information.

In some examples, communications interface 1060 may include logic and/or features to support a communication interface. For these examples, communications interface 1060 may include one or more communication interfaces that operate according to various communication protocols or standards to communicate over direct or network communication links. Direct communications may occur via use of communication protocols or standards described in one or more industry standards (including progenies and variants) such as those associated with the PCIe specification, the NVMe specification or the I3C specification. Network communications may occur via use of communication protocols or standards such those described in one or more Ethernet standards promulgated by the Institute of Electrical and Electronics Engineers (IEEE). For example, one such Ethernet standard promulgated by IEEE may include, but is not limited to, IEEE 802.3-2018, Carrier sense Multiple access with Collision Detection (CSMA/CD) Access Method and Physical Layer Specifications, Published in August 2018 (hereinafter "IEEE 802.3 specification"). Network communication may also occur according to one or more OpenFlow specifications such as the OpenFlow Hardware Abstraction API Specification. Network communications may also occur according to one or more Infiniband Architecture specifications. In some examples, communication interface 1060 may be part of a network interface controller or card (NIC) that includes circuitry to execute at least some processing operations or logic for apparatus 700 based on instructions included in a storage media that includes respective storage medium 900.

Computing platform 1000 may be part of a computing device that may be, for example, user equipment, a computer, a personal computer (PC), a desktop computer, a laptop computer, a notebook computer, a netbook computer, a tablet, a smart phone, embedded electronics, a gaming console, a server, a server array or server farm, a web server, a network server, an Internet server, a work station, a mini-computer, a main frame computer, a supercomputer, a network appliance, a web appliance, a distributed computing system, multiprocessor systems, processor-based systems, or combination thereof. Accordingly, functions and/or specific configurations of computing platform 1000 described herein, may be included or omitted in various embodiments of computing platform 1000, as suitably desired.

The components and features of computing platform 1000 may be implemented using any combination of discrete circuitry, ASICs, logic gates and/or single chip architectures. Further, the features of computing platform 1000 may be implemented using microcontrollers, programmable logic arrays and/or microprocessors or any combination of the foregoing where suitably appropriate. It is noted that hardware, firmware and/or software elements may be collectively or individually referred to herein as "logic", "circuit" or "circuitry."

It should be appreciated that the exemplary computing platform 1000 shown in the block diagram of FIG. 10 may represent one functionally descriptive example of many potential implementations. Accordingly, division, omission or inclusion of block functions depicted in the accompanying figures does not infer that the hardware components, circuits, software and/or elements for implementing these functions would necessarily be divided, omitted, or included in embodiments.

Although not depicted, any system can include and use a power supply such as but not limited to a battery, AC-DC converter at least to receive alternating current and supply direct current, renewable energy source (e.g., solar power or motion based power), or the like.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations may be stored on a tangible, machine readable medium and supplied to various customers or manufacturing facilities to load into the fabrication machines that actually make the logic or processor.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

Some examples may include an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The following examples pertain to additional examples of technologies disclosed herein.

Example 1. An example apparatus may include one or more registers to store at least one metric of a core of a multi-core processor while the core executes a workload thread. The apparatus may also include circuitry, at the core, to execute code. The executed code may schedule an event related to execution of the workload thread by the core. The executed code may also fetch, responsive to scheduling the event, a first metric from the one or more registers, the first metric to indicate a first performance characteristic of the core over a first time interval while the core executes the workload thread. The executed code may also push the first metric to a shared memory space of a memory accessible to a user-space application and accessible to other cores of the multi-core processor.

Example 2. The apparatus of example 1, the shared memory space of the memory may include a lockless buffer for use by the core and the user-space application. For this example, to push the first metric to the shared memory space of the memory includes to push the first metric to the lockless buffer.

Example 3. The apparatus of example 1, the executed code may also add a timestamp to the first metric prior to pushing the first metric to the shared memory space of the memory, the timestamp to indicate a time the first metric was fetched from the one or more registers.

Example 4. The apparatus of example 1, the executed code may also add a timestamp and a thread identifier to the fetched at least one metric prior to pushing the at least one metric to the shared memory space of the memory. The timestamp may indicate a time the at least one metric was fetched from the one or more registers. The thread identifier may identify the workload thread.

Example 5. The apparatus of example 1, the executed code may also schedule a second event related to execution of the workload thread by the core. The executed code may also fetch a second metric from the one or more registers. The second metric may indicate a second performance characteristic of the core over a second time interval while the core executes the workload thread. For this example, the second metric is fetched responsive to scheduling the second event and based on a time period between scheduling the event and scheduling the second event being lower than a time period threshold. The executed code may also push the second metric to the shared memory space of the memory.

Example 6. The apparatus of example 1, the event may include starting of a new workload thread, yield control of a workload task to an operating system kernel executed by the core, a task preemption, exception handling, a system call, or a signal to power up the workload thread from a low power state.

Example 7. The apparatus of example 1, the at least one metric may include instructions executed, level 2 (L2) cache misses, L2 cache hits, level 3 (L3) cache misses, L3 cache hits, branches mis-predicted, elapsed core clock ticks, core operating frequency, or core memory bandwidth usage.

Example 8. The apparatus of example 1, the one or more registers may be model-specific registers.

Example 9. An example method may include storing, to one or more registers, at least one metric of a core of a multi-core processor while the core executes a workload thread. The method may also include scheduling an event related to execution of the workload thread by the core. The method may also include fetching, responsive to scheduling the event, a first metric from the one or more registers, the first metric to indicate a first performance characteristic of the core over a first time interval while the core executes the workload thread. The method may also include pushing the first metric to a shared memory space of a memory accessible to a user-space application and accessible to other cores of the multi-core processor.

Example 10. The method of example 9, the shared memory space of the memory may include a lockless buffer for use by the core and the user-space application. For this example, to push the first metric to the shared memory space of the memory includes to push the first metric to the lockless buffer.

Example 11. The method of example 9 may also include adding a timestamp to the first metric prior to pushing the first metric to the shared memory space of the memory. The timestamp may indicate a time the first metric was fetched from the one or more registers.

Example 12. The method of example 9 may also include adding a timestamp and a thread identifier to the fetched at least one metric prior to pushing the at least one metric to the shared memory space of the memory. The he timestamp may indicate a time the at least one metric was fetched from the one or more registers. The thread identifier may identify the workload thread.

Example 13. The method of example 9, may also include scheduling a second event related to execution of the workload thread by the core. The method may also include fetching a second metric from the one or more registers, the second metric to indicate a second performance characteristic of the core over a second time interval while the core executes the workload thread. For this example, the second metric is fetched responsive to scheduling the second event and based on a time period between scheduling the event and scheduling the second event being lower than a time period threshold. The method may also include pushing the second metric to the shared memory space of the memory.

Example 14. The method of example 9, the event may be starting of a new workload thread, yield control of a workload task to an operating system kernel executed by the core, a task preemption, exception handling, a system call, or a signal to power up the workload thread from a low power state.

Example 15. The method of example 9, the at least one metric may be instructions executed, level 2 (L2) cache misses, L2 cache hits, level 3 (L3) cache misses, L3 cache hits, branches mis-predicted, elapsed core clock ticks, core operating frequency, or core memory bandwidth usage.

Example 16. The method of example 9, the one or more registers may be model-specific registers.

Example 17. An example at least one machine readable medium may include a plurality of instructions that in response to being executed by a system may cause the system to carry out a method according to any one of examples 9 to 16.

Example 18. An example apparatus may include means for performing the methods of any one of examples 9 to 16.

Example 19. An example at least one machine readable medium may include a plurality of instructions that in response to being executed by a system may cause the system to store, to one or more registers, at least one metric of a core of a multi-core processor while the core executes a workload thread. The instructions may also cause the system to schedule an event related to execution of the workload thread by the core. The instructions may also cause the system to fetch, responsive to scheduling the event, a first metric from the one or more registers, the first metric to indicate a first performance characteristic of the core over a first time interval while the core executes the workload thread. The instructions may also cause the system to push the first metric to a shared memory space of a memory accessible to a user-space application and accessible to other cores of the multi-core processor.

Example 20. The at least one machine readable medium of example 19, the shared memory space of the memory may include a lockless buffer for use by the core and the user-space application. For this example, to push the first metric to the shared memory space of the memory includes to push the first metric to the lockless buffer.

Example 21. The at least one machine readable medium of example 19, the instructions may also cause the system to add a timestamp to the first metric prior to pushing the first metric to the shared memory space of the memory. The timestamp may indicate a time the first metric was fetched from the one or more registers.

Example 22. The at least one machine readable medium of example 19, the instructions may also cause the system to add a timestamp and a thread identifier to the fetched at least one metric prior to pushing the at least one metric to the shared memory space of the memory. The timestamp may indicate a time the at least one metric was fetched from the one or more registers. The thread identifier may identify the workload thread.

Example 23. The at least one machine readable medium of example 19, f the instructions may also cause the system to schedule a second event related to execution of the workload thread by the core. The instructions may also cause the system to fetch a second metric from the one or more registers, the second metric to indicate a second performance characteristic of the core over a second time interval while the core executes the workload thread. For this example, the second metric is fetched responsive to scheduling the second event and based on a time period between scheduling the event and scheduling the second event being lower than a time period threshold. The instructions may also cause the system to push the second metric to the shared memory space of the memory.

Example 24. The at least one machine readable medium of example 19, the event may be starting of a new workload thread, yield control of a workload task to an operating system kernel executed by the core, a task preemption, exception handling, a system call, or a signal to power up the workload thread from a low power state.

Example 25. The at least one machine readable medium of example 19, the at least one metric may be instructions executed, level 2 (L2) cache misses, L2 cache hits, level 3 (L3) cache misses, L3 cache hits, branches mis-predicted, elapsed core clock ticks, core operating frequency, or core memory bandwidth usage.

Example 26. The at least one machine readable medium of example 19, the one or more registers may be model-specific registers.

Example 27. An example apparatus may include a memory interface to access a shared memory space of a memory accessible to cores of a multi-core processor. The apparatus may also include circuitry to execute a user-space application. The user-space application may fetch core-specific metrics stored to the shared memory space via the memory interface, the core-specific metrics to indicate performance characteristics of one or more cores of the multi-core processor while the one or more cores execute workload thread. The user-space application may also aggregate, over a time interval, fetched core-specific metrics to generate core-specific metrics information. The user-space application may also publish the core-specific metrics information.

Example 28. The apparatus of example 27, to publish the core-specific metrics information may include the user-space application to send the core-specific metrics information to a QoS management application.

Example 29. The apparatus of example 28, the QoS management application may be a local QoS management application hosted by a same computing platform that hosts the circuitry to execute the user-space application or may be a remote QoS management application hosted by a different computing platform that hosts the circuitry to execute the user-space application.

Example 30. The apparatus of example 27, the core-specific metrics are fetched from multiple lockless buffers maintained in the shared memory space of the memory. Each core of the one or more cores of the multi-core processor may be arranged to push metrics to indicate performance characteristics of each core while executing one or more workload threads over the time interval. The metrics of each core may be pushed to different lockless buffers from among the multiple lockless buffers.

Example 31. The apparatus of example 27, the user-space application to aggregate the fetched core-specific metrics to generate core-specific metrics information includes the core-specific metrics information to include a minimum value of the fetched core-specific metrics, a maximum value of the fetched core-specific metrics, an average value of the fetched core-specific metrics or a 90 percentile values of the fetched core-specific metrics.

Example 32. The apparatus of example 27, the circuitry to execute the user-space application may be circuitry at a dedicated core of the multi-core processor, may be circuitry at a network interface or may be circuitry of a field programmable gate array.

Example 33. An example method may include fetching core-specific metrics stored to a shared memory space of a memory accessible to cores of a multi-core processor, the core-specific metrics to indicate performance characteristics of one or more cores of the multi-core processor while the one or more cores execute workload threads. The method may also include aggregating, over a time interval, fetched core-specific metrics to generate core-specific metrics information. The method may also include publishing the core-specific metrics information.

Example 34. The method of example 33, to publish the core-specific metrics information further may include sending the core-specific metrics information to a QoS management application.

Example 35. The method of example 34, the QoS management application may be a local QoS management application or may be a remote QoS management application.

Example 36. The method of example 33, the core-specific metrics may be fetched from multiple lockless buffers maintained in the shared memory space of the memory. Each core of the one or more cores of the multi-core processor may be arranged to push metrics to indicate performance characteristics of each core while executing one or more workload threads over the time interval. The metrics of each core may be pushed to different lockless buffers from among the multiple lockless buffers.

Example 37. The method of example 33, to aggregate the fetched core-specific metrics to generate core-specific metrics information may include the core-specific metrics information to include a minimum value of the fetched core-specific metrics, a maximum value of the fetched core-specific metrics, an average value of the fetched core-specific metrics or a 90 percentile values of the fetched core-specific metrics.

Example 38. An example at least one machine readable medium may include a plurality of instructions that in response to being executed by a system may cause the system to carry out a method according to any one of examples 33 to 37.

Example 39. An example apparatus may include means for performing the methods of any one of examples 33 to 37.

Example 40. An example at least one machine readable medium may include a plurality of instructions that in response to being executed by a system may cause the system to fetch core-specific metrics stored to a shared memory space of a memory accessible to cores of a multi-core processor. The core-specific metrics may indicate performance characteristics of one or more cores of the multi-core processor while the one or more cores execute workload threads. The instructions may also cause the system to aggregate, over a time interval, fetched core-specific metrics to generate core-specific metrics information. The instructions may also cause the system to publish the core-specific metrics information.

Example 41. The at least one machine readable medium of example 40, to publish the core-specific metrics information further may include the instruction to cause the system to send the core-specific metrics information to a QoS management application.

Example 42. The at least one machine readable medium of example 41, the QoS management application may be a local QoS management application or may be a remote QoS management application.

Example 43. The at least one machine readable medium of example 40, the core-specific metrics may be fetched from multiple lockless buffers maintained in the shared memory space of the memory. Each core of the one or more cores of the multi-core processor may be arranged to push metrics to indicate performance characteristics of each core while executing one or more workload threads over the time interval. The metrics of each core may be pushed to different lockless buffers from among the multiple lockless buffers.

Example 44. The at least one machine readable medium of example 40, to aggregate the fetched core-specific metrics to generate core-specific metrics information may include the core-specific metrics information to include a minimum value of the fetched core-specific metrics, a maximum value of the fetched core-specific metrics, an average value of the fetched core-specific metrics or a 90 percentile values of the fetched core-specific metrics.

It is emphasized that the Abstract of the Disclosure is provided to comply with 37 C.F.R. Section 1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separate example. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An apparatus comprising:
one or more registers to store at least one metric of a core of a multi-core processor while the core executes a workload thread; and
circuitry, at the core, to execute code to:
schedule an event related to execution of the workload thread by the core;
fetch, responsive to scheduling the event, a first metric from the one or more registers, the first metric to indicate a first performance characteristic of the core over a first time interval while the core executes the workload thread; and
push the first metric to a shared memory space of a memory accessible to a user-space application and accessible to other cores of the multi-core processor.

2. The apparatus of claim 1, comprising the shared memory space of the memory to include a lockless buffer for use by the core and the user-space application, wherein to push the first metric to the shared memory space of the memory includes to push the first metric to the lockless buffer.

3. The apparatus of one of the previous claims, further comprising the circuitry to execute code to:
add a timestamp to the first metric prior to pushing the first metric to the shared memory space of the memory, the timestamp to indicate a time the first metric was fetched from the one or more registers.

4. The apparatus of one of the previous claims, further comprising the circuitry to execute code to:
add a timestamp and a thread identifier to the fetched at least one metric prior to pushing the at least one metric to the shared memory space of the memory, the timestamp to indicate a time the at least one metric was fetched from the one or more registers, the thread identifier to identify the workload thread.

5. The apparatus of one of the previous claims, further comprising the circuitry to execute code to:
schedule a second event related to execution of the workload thread by the core;
fetch a second metric from the one or more registers, the second metric to indicate a second performance characteristic of the core over a second time interval while the core executes the workload thread, wherein the second metric is fetched responsive to scheduling the second event and based on a time period between scheduling the event and scheduling the second event being lower than a time period threshold; and
push the second metric to the shared memory space of the memory.

6. The apparatus of one of the previous claims, wherein the event comprises starting of a new workload thread, yield control of a workload task to an operating system kernel executed by the core, a task preemption, exception handling, a system call, or a signal to power up the workload thread from a low power state.

7. The apparatus of one of the previous claims, wherein the at least one metric comprises instructions executed, level 2 (L2) cache misses, L2 cache hits, level 3 (L3) cache misses, L3 cache hits, branches mis-predicted, elapsed core clock ticks, core operating frequency, or core memory bandwidth usage.

8. The apparatus of one of the previous claims, wherein the one or more registers comprise model-specific registers.

9. A method comprising:
storing, to one or more registers, at least one metric of a core of a multi-core processor while the core executes a workload thread;
scheduling an event related to execution of the workload thread by the core;
fetching, responsive to scheduling the event, a first metric from the one or more registers, the first metric to indicate a first performance characteristic of the core over a first time interval while the core executes the workload thread; and
pushing the first metric to a shared memory space of a memory accessible to a user-space application and accessible to other cores of the multi-core processor.

10. The method of claim 9, comprising the shared memory space of the memory to include a lockless buffer for use by the core and the user-space application, wherein to push the first metric to the shared memory space of the memory includes to push the first metric to the lockless buffer.

11. The method of claim 9 or 10, further comprising:
scheduling a second event related to execution of the workload thread by the core;
fetching a second metric from the one or more registers, the second metric to indicate a second performance characteristic of the core over a second time interval while the core executes the workload thread, wherein the second metric is fetched responsive to scheduling the second event and based on a time period between scheduling the event and scheduling the second event being lower than a time period threshold; and
pushing the second metric to the shared memory space of the memory.

12. The method of one of the claims 9-11, wherein the event comprises starting of a new workload thread, yield control of a workload task to an operating system kernel executed by the core, a task preemption, exception handling, a system call, or a signal to power up the workload thread from a low power state.

13. The method of one of the claims 9-12, wherein the at least one metric comprises instructions executed, level 2 (L2) cache misses, L2 cache hits, level 3 (L3) cache misses, L3 cache hits, branches mis-predicted, elapsed core clock ticks, core operating frequency, or core memory bandwidth usage.

14. The method of one of the claims 9-13, wherein the one or more registers comprise model-specific registers.

15. At least one machine readable medium comprising a plurality of instructions that in response to being executed by a system causes the system to carry out a method according to any one of claims 9 to 14.
